# FASCICULE DE BREVET EUROPEEN

(11) **EP 0 974 040 B1**
(45) Date de publication et mention de la délivrance du brevet: **24.07.2002**
(21) Numéro de dépôt: 98920575.2
(22) Date de dépôt: 07.04.1998
(51) Int. Cl.: G01D 5/165, G01B 7/30

(54) **CODEUR ANGULAIRE ANALOGIQUE**
ANOLOGER WINKELCODIERER
ANALOG ANGULAR CODER

(30) Priorité: 07.04.1997 FR 9704194
(43) Date de publication de la demande: 26.01.2000
(73) Titulaire: CROUZET APPLIANCE CONTROLS S.A., 26120 Montelier Chabeuil (FR)
(72) Inventeur: ASTIC, Georges, F-26320 Saint Marcel les Valence (FR)
(74) Mandataire: Geismar, Thierry
(86) Numéro de dépôt international: FR9800695
(87) Numéro de publication internationale: WO9845666

(56) Documents cités:
- EP-A- 0 546 907
- DE-A- 2 654 238
- GB-A- 2 228 835
- US-A- 3 205 365
- US-A- 4 628 316

## Description

La présente invention concerne un codeur analogique angulaire, et plus particulièrement un tel codeur du type comprenant une piste résistive et un balai associé à cette piste, des moyens pour amener la première et la deuxième extrémités de la piste résistive à un premier et à un deuxième potentiels respectivement, et des moyens pour lire le potentiel du point de la piste résistive au contact du balai.

Les codeurs connus de ce type, tels que décrits par exemple dans les documents GB-A-2228835, US-A-3205365 et DE-A-2654238, comportent généralement une piste résistive pratiquement circulaire alimentée à ses extrémités en courant continu et une piste conductrice concentrique à la piste résistive, et un balai est monté rotatif autour du centre des pistes et relie deux points homologues de chacune des pistes. On comprend que la tension mesurée sur la piste conductrice est proportionnelle à l'angle entre l'extrémité de la piste résistive mise à la masse et les points reliés par le balai.

De tels dispositifs sont utilisés par exemple dans des systèmes associant une partie mécanique et une partie électronique, tels que des programmeurs de machines à laver, dans lesquels l'électronique de traitement doit pouvoir connaître économiquement, par lecture directe, la position angulaire d'un axe rotatif avec une précision donnée, allant, par exemple, de 10 à 68 positions par tour.

On entend par lecture directe, la possibilité de reconnaître la position de l'axe en une fraction de seconde, ce qui exclut les systèmes fonctionnant par lecture incrémentale, c'est-à-dire par additions d'incréments depuis une position d'origine.

Jusqu'à un certain nombre de positions par tour, par exemple de l'ordre de 8, l'utilisation combinée d'un potentiomètre de qualité moyenne et d'un microcontrôleur équipé d'un convertisseur analogique/numérique, chacun alimenté sous la même tension, 5 volts par exemple, permet d'atteindre le résultat souhaité. Mais il est nécessaire aux fonctions de sélection et de visualisation des programmes de lavage des programmateurs de machines à laver d'atteindre une plage de 18 à 60 positions par tour. Or, il n'est pas possible d'atteindre ces niveaux de définition angulaire tout en conservant un système économique basé sur l'emploi combiné d'un potentiomètre et d'un microcontrôleur équipé d'un convertisseur analogique/numérique.

Les difficultés sont en effet de deux ordres.

Tout d'abord, la courbe de réponse du potentiomètre n'est pas linéaire, c'est-à-dire que, si l'on trace le graphe de réponse du curseur (avec la rotation en abscisse et le potentiel du curseur en ordonnée), la courbe obtenue n'est pas suffisamment rectiligne pour permettre d'établir une corrélation biunivoque entre la tension obtenue et la position angulaire de l'axe.

L'autre difficulté réside dans le non positionnement mécanique rigoureux de l'axe sur ses positions fondamentales.

Par ailleurs, il est important de rester en technologie analogique qui nécessite un minimum d'entrées sur le microcontrôleur, ce qui limite les coûts.

On pourrait alors conserver un potentiomètre économique, c'est-à-dire non linéaire, et mémoriser de façon non volatile la courbe caractéristique du potentiomètre dans le microcontrôleur. Il en résulterait toutefois un surcoût du fait de la nécessité de la mémoire non volatile et du temps nécessaire à cette mémorisation.

Une autre solution consisterait à utiliser un potentiomètre ayant une linéarité suffisante pour que le microcontrôleur associe sans erreur la tension relevée sur le curseur et la position angulaire de l'axe. Mais, même dans ce cas, il peut y avoir une erreur due à une insuffisance de qualité du positionnement de l'axe sur sa position fondamentale, c'est-à-dire qu'en fait l'axe est arrêté entre deux positions fondamentales.

La présente invention vise à pallier ces inconvénients.

A cet effet, l'invention a pour objet un codeur angulaire analogique du type comprenant une piste résistive et un balai associé à cette piste résistive, des moyens pour amener la première et la deuxième extrémités de la piste résistive à un premier et à un deuxième potentiels respectivement, et des moyens pour lire le potentiel du point de la piste résistive au contact du balai, caractérisé par le fait qu'il comprend des moyens pour amener un autre point de la piste résistive à un troisième potentiel, et des moyens pour moduler au moins ledit premier ou deuxième potentiel, ledit troisième potentiel étant fixe.

Dans un mode de réalisation particulier de l'invention, un desdits premier ou deuxième potentiels est fixe.

Egalement dans un mode de réalisation particulier de l'invention, l'un au moins desdits premier ou deuxième potentiels est modulé en créneaux.

Egalement dans un mode de réalisation particulier de l'invention, ledit autre point est sensiblement au milieu de la piste résistive.

Plus particulièrement, le codeur selon l'invention peut comprendre une piste conductrice concentrique à la piste résistive, le balai reliant un point de la piste résistive à la piste conductrice, et le potentiel du point de la piste résistive au contact du balai étant lu sur la piste conductrice.

Ainsi, si l'on suppose par exemple que les deux extrémités de la piste résistive sont à la masse et qu'une tension d'alimentation donnée V₀ est appliquée en son point milieu, les deux moitiés de cette piste se trouvent alimentés par cette tension. En conséquence, à une lecture de potentiel donnée correspondent deux positions angulaires possibles. La discrimination est faite par les modulations différentes que l'on relève selon que l'on est sur l'une ou l'autre des moitiés de la piste.

On décrira maintenant, à titre d'exemple non limitatif, un mode de réalisation particulier de l'invention, en référence au dessin schématique annexé dans lequel:
- la figure 1 représente un codeur selon l'invention; et
- la figure 2 représente les signaux relevés sur ce codeur.

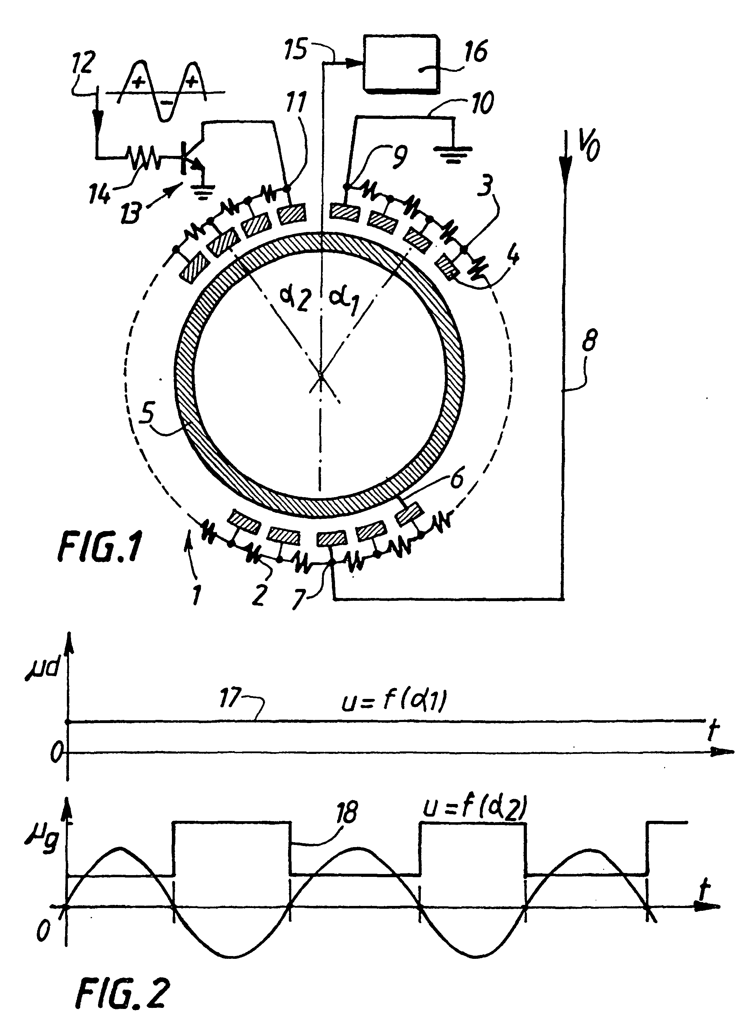

La figure 1 montre un codeur comprenant de façon connue une piste résistive 1. La piste 1 est ici formée d'un ensemble de résistances discrètes 2 dont les interconnexions 3 sont reliées à des plots 4 de prélèvement de tension. Cette piste pourrait toutefois être aussi bien réalisée de façon continue, par exemple par sérigraphie, la tension étant alors directement prélevée sur la piste.

Une piste conductrice 5 est réalisée concentriquement à la piste 1. Un curseur, non représenté, monté rotatif au centre des pistes 1 et 5 et dont la position angulaire doit être mesurée, porte un balai 6 reliant le plot correspondant à cette position à la piste 5.

Le point médian 7 de la piste résistive 1 est relié à la tension d'alimentation V₀ par une ligne 8.

L'une des extrémités 9 de la piste 1 est reliée à la masse par une ligne 10. Son autre extrémité 11 est reliée à une tension alternative, ici le secteur 12, par l'intermédiaire d'un interrupteur 13.

L'interrupteur 13 est dans le cas présent constitué d'un transistor dont le collecteur est relié au point 11, dont l'émetteur est relié à la masse, et dont la base est reliée au secteur par l'intermédiaire d'une résistance 14.

Enfin, la piste conductrice 5 est reliée par une ligne 15 à l'entrée analogique d'un microcontrôleur 16.

Si l'on suppose maintenant l'interrupteur 13 fermé, on constate qu'on lira la même tension, continue, sur deux plots 4 symétriques par rapport au point 7. Une telle tension *u*_{*d*} est représentée en 17 à la figure 2.

Toutefois, l'interrupteur 13 n'est pas fermé en permanence puisque la base du transistor est alternativement portée à des tensions positives puis négatives. Le transistor est donc alternativement saturé puis bloqué. Il en résulte que la tension *u*_{*g*} lue sur les plots situés, sur la figure 1, à la gauche du point médian 7, est modulée en créneaux comme montré en 18 à la figure 2.

Par conséquent, le microcontrôleur saura reconnaître sur quelle moitié de la piste résistive se trouve le balai 6 par la forme de la tension relevée sur la piste 5.

On obtient ainsi une définition double de ce qu'elle aurait été en portant simplement le point 11 au potentiel V₀.

## Revendications

1. Codeur angulaire analogique du type comprenant une piste résistive (1) et un balai (6) associé à cette piste résistive, des moyens (10, 12) pour amener la première (9) et la deuxième (11) extrémités de la piste résistive à un premier et à un deuxième potentiels respectivement, et des moyens (5, 15, 16) pour lire le potentiel du point de la piste résistive au contact du balai, **caractérisé par le fait qu'**il comprend des moyens (8) pour amener un autre point (7) de la piste résistive à un troisième potentiel, et des moyens (13) pour moduler au moins ledit premier ou deuxième potentiel, ledit troisième potentiel étant fixe.

2. Codeur selon la revendication 1, dans lequel un desdits premier ou deuxième potentiels est fixe.

3. Codeur selon l'une quelconque des revendications 1 et 2, dans lequel l'un au moins desdits premier ou deuxième potentiels est modulé en créneaux.

4. Codeur selon l'une quelconque des revendications 1 à 3, dans lequel ledit autre point est sensiblement au milieu de la piste résistive.

5. Codeur selon l'une quelconque des revendications 1 à 3, comprenant une piste conductrice (5) concentrique à la piste résistive, le balai reliant un point de la piste résistive à la piste conductrice, et le potentiel du point de la piste résistive au contact du balai étant lu sur la piste conductrice.

## Patentansprüche

1. Analoger Winkelcodierer mit einer Widerstandsbahn (1) und einer mit dieser Widerstandsbahn verbundenen Abtastbürste (6), mit Mitteln (10, 12) um das erste (9) und das zweite (11) Ende der Widerstandsbahn jeweils an eine erste und eine zweite Spannung anzuschließen, und mit Mitteln (5, 15, 16) um die Spannung des Punktes der Widerstandsbahn am Kontakt der Abtastbürste abzulesen, **dadurch gekennzeichnet, dass** er Mittel (8) zur Verbindung eines anderen Punktes (7) der Widerstandsbahn mit einer dritten Spannung und Mittel (13) zur Variation mindestens der besagten ersten oder zweiten Spannung aufweist, wobei die besagte dritte Spannung gleich bleibt.

2. Codierer nach Anspruch 1, wobei eine der besagten ersten oder zweiten Spannung unveränderlich ist.

3. Codierer nach einem der Ansprüche 1 und 2, wobei mindestens eine der besagten erste oder zweite Spannung als Rechteckimpuls moduliert ist.

4. Codierer nach einem der Ansprüche 1 bis 3, wobei besagter anderer Punkt sich exakt in der Mitte der Widerstandsbahn befindet.

5. Codierer nach einem der Ansprüche 1 bis 3, mit einer konzentrisch zur Widerstandsbahn liegenden Leiterbahn (5), wobei die Abtastbürste einen Punkt der Widerstandsbahn mit der Leiterbahn verbindet, und die Spannung des Punktes der Widerstandsbahn am Kontakt der Abtastbürste auf der leitenden Spur abgelesen wird.

## Claims

1. An analog angular coder of the type comprising a resistive track (1) and a brush (6) associated with this resistive track, means (10, 12) for bringing the first (9) and second (11) ends of the resistive track to first and second potentials respectively, and means (5, 15, 16) for reading the potential of the point on the resistive track in contact with the brush, **characterised by** the fact that it comprises means (8) for bringing another point (7) on the resistive track to a third potential, and means (13) for modulating at least said first or second potential, said third potential being fixed.

2. A coder according to Claim 1, in which one of said first or second potentials is fixed.

3. A coder according to either one of Claims 1 and 2, in which at least one of said first or second potentials is modulated in steps.

4. A coder according to any one of Claims 1 to 3, in which said other point is substantially at the middle of the resistive track.

5. A coder according to any one of Claims 1 to 3, comprising a conductive track (5) concentric with the resistive track, the brush connecting a point on the resistive track to the conductive track, and the potential of the point on the resistive track in contact with the brush being read on the conductive track.
